# EUROPEAN PATENT SPECIFICATION

(11) **EP 1 700 690 B1**
(45) Date of publication and mention of the grant of the patent: **23.07.2008**
(21) Application number: 05004924.6
(22) Date of filing: 07.03.2005
(51) Int. Cl.: B32B 37/10, B32B 37/22, B32B 38/18

(54) **Laminator with small film roll**
Laminiervorrichtung mit kleiner Filmrolle
Appareil de lamination avec un petit rouleau de film

(43) Date of publication of application: 13.09.2006
(73) Proprietor: GMP Co., Ltd., Paju-si, Kyonggi (KR)
(72) Inventor: Kim, Yang-Pioung, Eunpyoung-gu, Seoul (KR)
(74) Representative: Hauck Patent- und Rechtsanwälte

(56) References cited:
- EP-A- 0 832 738
- EP-A- 1 084 824
- US-A- 5 783 024
- US-A1- 2002 124 970
- US-A1- 2003 209 331
- US-B1- 6 253 821

## Description

### BACKGROUND OF THE INVENTION

### 1. Field of the Invention

The present invention relates generally to small laminators used in places such as offices and, more particularly, to a laminator with a small film roll which has a structure capable of having the small film roll mounted thereto, thus reducing costs required to laminate a target sheet, thereby solving problems occurring due to expensive costs, and in which a feed tray is easily and removably installed, so that a process of mounting the small film roll to the laminator is simplified, thereby most users can easily use the laminator.

### 2. Description of the Related Art

Generally, laminators are classified into large laminators, which are able to coat films on large photographs or advertisement papers, and pouch laminators, which are used in general offices and are able to laminate sheets of A3 size or less. EP 1 084 824 A1 discloses a laminating apparatus, which allows laminating various sizes of paper. Therefore the distance between a pair of paper feed rollers and a pair of pinch rollers is adjusted according to the size of the paper. The adjustment is synchronized so that the paper size and sheet roll diameters are accounted for according to the insertion of a detachable housing providing a cassette with different paper sizes. The present invention relates to small laminators to be used in general offices.

Up to now, most small laminators used, in general offices or homes are pouch laminators. In such a pouch laminator, the size of film used for laminating is standardized, for example, A4 or A3 size. Accordingly, a user must purchase standardized films and coat one film on a target sheet at a time.

As such, because conventional laminators have a structure in which a film roll is set in a laminator, the size and weight of the laminator are reduced. However, if a target sheet is larger than A3 size, it is impossible to laminate the target sheet. Furthermore, pouch film used in a pouch laminator is more expensive than roll film. Thus, the user is burdened with additional costs. As well, there is a problem of waste of film.

In addition, in conventional pouch laminators, there is no device for embossment of a target sheet. Therefore, the texture of the target sheet is limited, so that it is difficult to produce film-coated products having various and graceful shapes.

Moreover, in conventional laminators, because the pressure of rollers to compress a target sheet is constant, the number of defective products is increased. Thus, film waste is serious. Although a laminator has a structure capable of having the roller pressure adjusted, a separate compression adjusting handle is required and a user must manually manipulate the compression adjusting handle.

### SUMMARY OF THE INVENTION

Accordingly, the present invention has been made keeping in mind the above problems occurring in the prior art, and an object of the present invention is to provide a laminator with a small film roll which has a structure capable of mounting the small film roll thereto, thus reducing costs required for laminating a target sheet, thereby solving problems related to high costs, and in which a feed tray is easily and removably installed, so that a process of mounting the small film roll to the laminator is simplified, thereby most users can easily use the laminator, and which has a cutting unit at a rear portion of the laminator, so that a user can easily cut a film-coated sheet without a separate cutting tool.

Another object of the present invention is to provide a laminator with a small film roll which is able to emboss a target sheet merely by replacing an upper heating roller with a roller having an embossing function without an additional embossing work using expensive equipment, thus texturing the target sheet in various and graceful shapes.

In order to accomplish the above object, the present invention provides a laminator with a small film roll., including: a pair of sidewalls provided at both sides of the laminator, each of the sidewalls of the laminator having upper and lower film roll supports provided on upper and lower portions of an inner surface of the sidewall, respectively, a plurality of slide slots formed at intermediate positions through the sidewall, and a stop protrusion provided at a predetermined position on the inner surface of the sidewall; and a drive unit provided on an outer surface of one of the sidewalls of the laminator, having a drive gear provided at a predetermined position on the outer surface of the sidewall and rotated by a drive motor, a first driven gear engaging with the drive gear and rotated by the rotation of the drive gear, upper and lower compression roller gears cooperating with the first driven gear and rotated by the rotation of the first driven gear, with a circular end plate provided on an end surface of each of the upper and lower compression roller gears such that the circular end plates of the upper and lower compression roller gears face each other, thus preventing the upper and lower compression roller gears from being removed, 4 second driven gear engaging with the lower compression roller gear and rotated along with the lower compression roller gear, and upper and lower heating roller gears cooperating with the second driven gear and rotated along with the second driven gear, with a circular end plate provided on an end surface of each of the upper and lower heating roller gears such that the circular end plates of the upper and lower heating roller gears face to each other, thus preventing the upper and lower heating roller gears from being removed. The laminator further includes a feed tray provided between the sidewalls of the laminator, having a coupling slot provided at a predetermined position on each of opposite sides of the feed tray in a longitudinal direction, so that the feed tray is coupled to a pair of coupling units by the coupling slots, and a stop notch provided at a predetermined position on each of the opposite sides of the feed tray such that the stop notch is hooked to the stop protrusion provided on the inner surface of each of the sidewalls of the laminator; and a pressure adjusting device provided on the outer surface of each of the sidewalls of the laminator, having a first link, a second link rotatably coupled at an end thereof to an end of the first link, a vertically movable link rotatably coupled to a predetermined position of the second link, a lower bracket coupled to an upper end of the vertically movable link, with a plurality of guide slots formed in a central portion of the lower bracket, and a first support plate provided on an upper end of the lower bracket. The pressure adjusting device further has an upper bracket coupled to a guide rod mounted to the lower bracket, with a spring fitted over the guide rod, and a second support plate provided on a lower end of the upper bracket.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a perspective view of a laminator with a small film roll, according to an embodiment a present invention;
FIG. 2 is a perspective view showing a cutting unit of the laminator of FIG. 1;
FIG. 3 is a side view showing the drive mechanism of the laminator of FIG. 1;
FIG. 4a is a side view showing the laminator of FIG. 1 which is ready for a laminating process;
FIG. 4b is a side view showing the state of the laminator of FIG. 4a during a laminating process;
FIG. 5 is a perspective view showing a feed tray and rotating arms of the laminator of FIG. 1; and
FIG. 6 is a perspective view showing a roller having embossments on the laminator according to the present invention.

### DESCRIPTION OF THE PREFERRED EMBODIMENTS

Hereinafter, a preferred embodiment of the present invention will be described in detail with reference to the accompanying drawings.

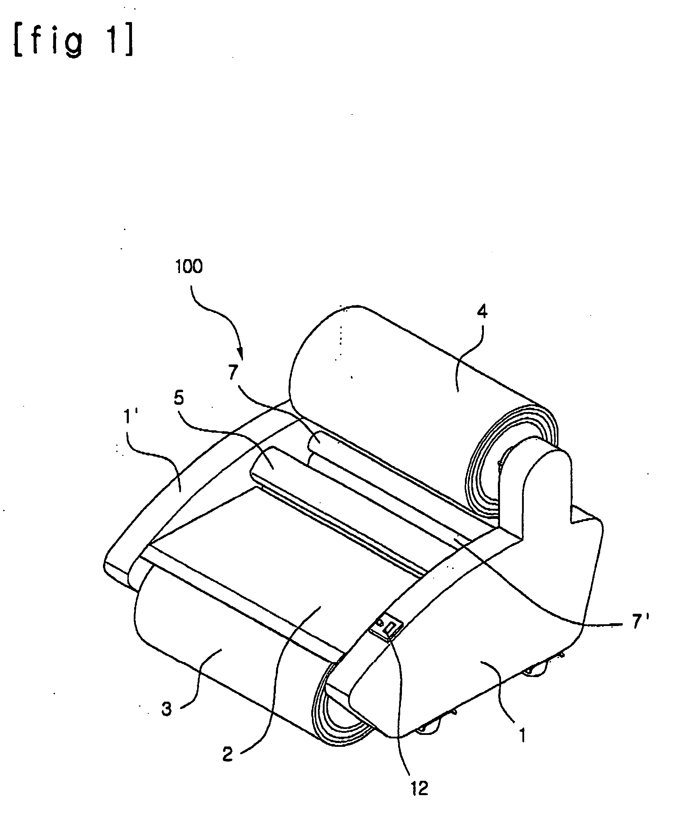

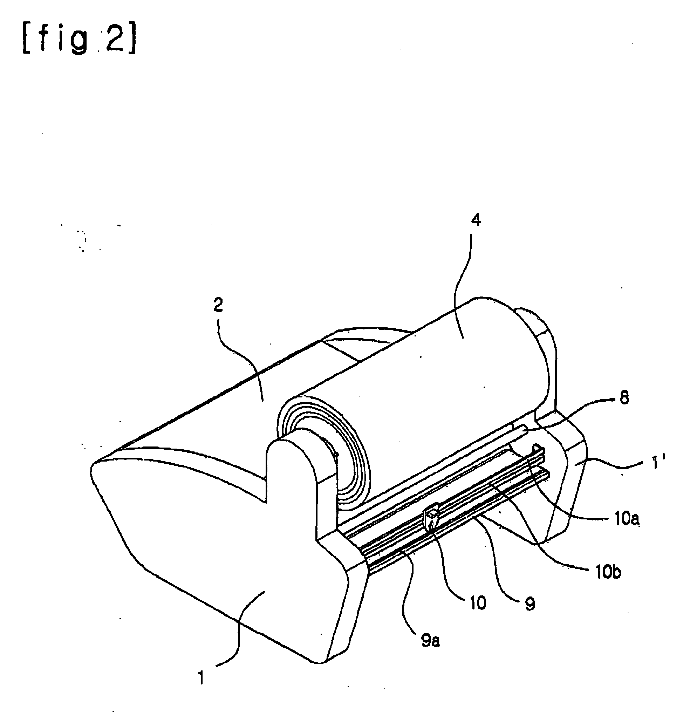

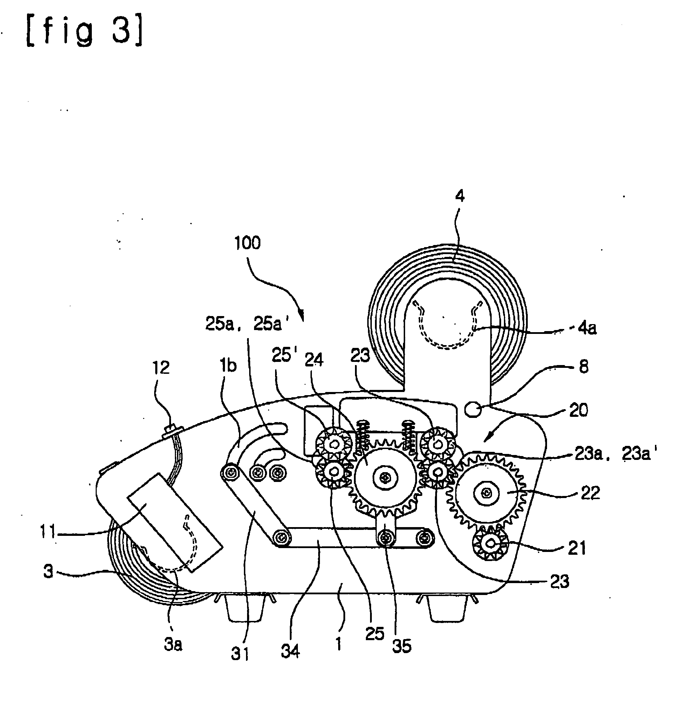

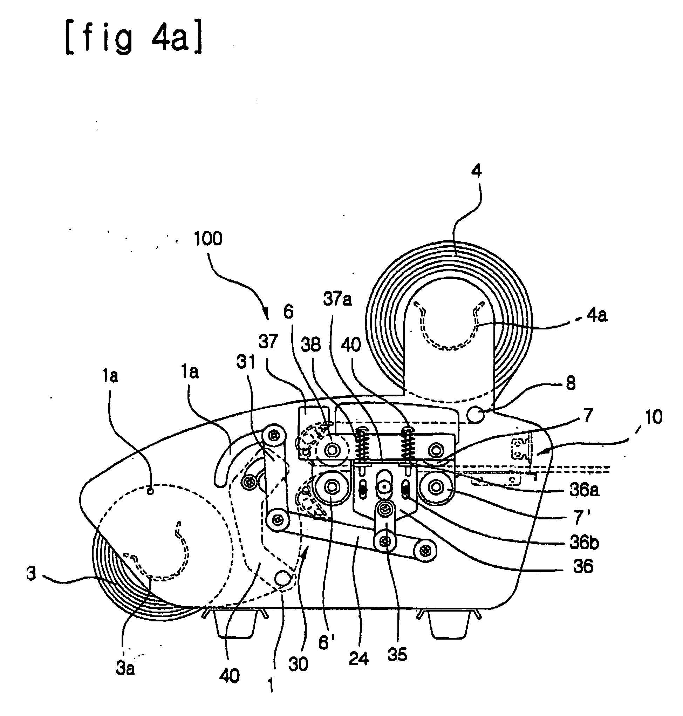

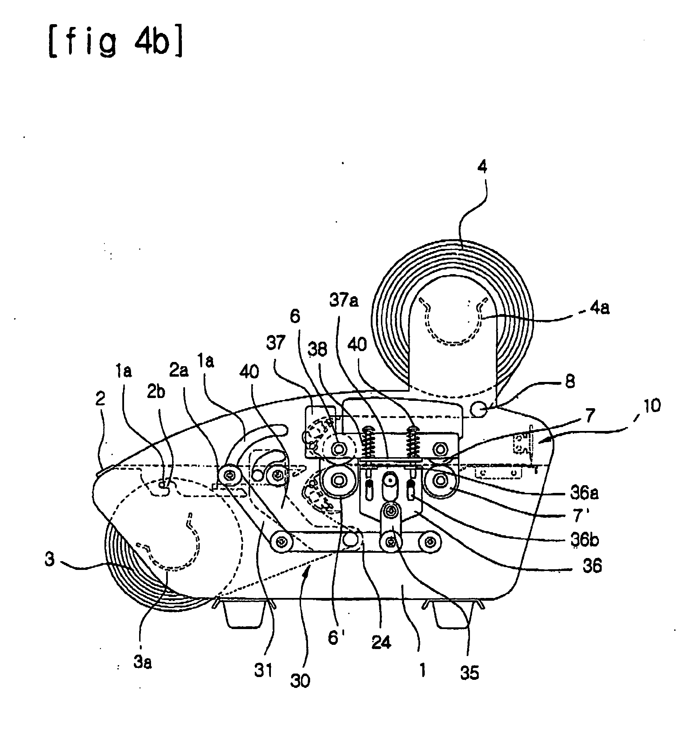

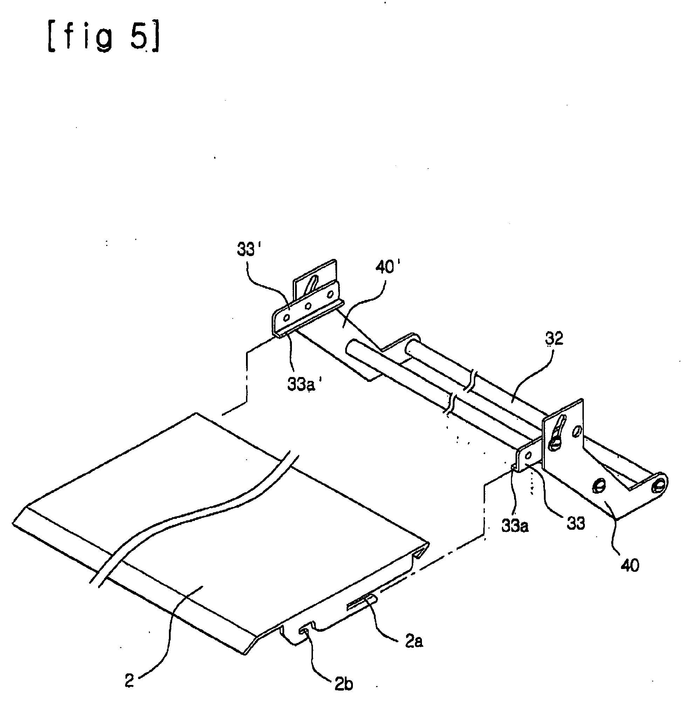

FIG. 1 is a perspective view of a laminator 100 with a small film roll, according to an embodiment of the present invention. FIG. 2 is a perspective view showing a cutting unit 10 of the laminator 100 of FIG. 1. FIG. 3 is a side view showing the drive mechanism of the laminator 100 of FIG. 1. FIG. 4a is a side view showing the laminator 100 of FIG. 1 which is ready for a laminating process. FIG. 4b is a side view showing a state of the laminator 100 of FIG. 4a during a laminating process. FIG. 5 is a perspective view showing a feed tray 2 and rotating arms 40 of the laminator 100 of FIG. 1.

As shown in FIG. 1, the laminator 100 according to the embodiment of the present invention includes opposite sidewalls 1 and 1' at both sides thereof, and a feed tray 2 which is provided between the sidewalls 1 and 1' of the laminator 100. A lower film roll 3 is supported between the sidewalls 1 and 1' below the feed tray 2. Preheating devices 5 and 5' are respectively provided around upper and lower heating rollers 6 and 6' behind the feed tray 2. Upper and lower compression rollers 7 and 7' are provided behind the upper and lower heating rollers 6 and 6'. A guide roller 8 is provided over the upper compression roller 7. An upper film roll 4 is supported between the sidewalls 1 and 1' of the laminator 1.00 over the guide roller 8.

Furthermore, an output plate 9 having a cutting groove 9a is provided below the lower compression roller 7'. The cutting unit 1.0, which moves along a guide bar 10a in a latitudinal direction of the laminator 100, is provided over the output plate 9.

The upper and lower film rolls 4 and 3 are supported by upper and lower film roll supports 4a and 3a which have semicircular cross-sections and are respectively provided on upper and lower portions of inner surfaces of the sidewalls 1 and 1' of the laminator 100. A power switch 12 is provided on the sidewall 1, of the laminator 7.00 and is connected to a controller 11 which is installed in the sidewall 1.

FIG. 2 is a perspective view showing the cutting unit 10 of the laminator 100.

As shown in FIG. 2, the output plate 9, on which the cutting groove 9a is formed in a longitudinal direction of the output plate 9, is provided at the rear portion of the laminator 100. The cutting unit 10 moves along the guide bar 10a which has a guide groove 10b and is provided over the output plate 9. An end of the cutting unit 10 is positioned in the cutting groove 9a of the output plate 9. Therefore, when a user moves the cutting unit 10 in a latitudinal direction of the laminator 100, a film-coated target sheet is cut.

FIG. 3 shows the drive mechanism of the laminator 100.

As shown in FIG. 3, the laminator 100 further includes a drive unit 20 which is provided on an outer surface of the sidewall 1 of the laminator 100. In the drive unit 20, a drive gear 21, which is provided at a predetermined position on the outer surface of the sidewall 1, is rotated by a drive motor (not shown) which is installed in the laminator 100. Then, a first driven gear 22, which engages with the drive gear 21, is rotated by the rotation of the drive gear 21, Thus, upper and lower compression roller gears 23 and 23', which cooperate with the first driven gear 22, are rotated by the rotation of the first driven gear 22. As a result, the upper and lower compression rollers 7 and 7' rotate along with the upper and lower compression roller gears 23 and 23'.

Furthermore, the lower compression roller gear 23' engages with a second driven gear 24. Upper and lower heating roller gears 25 and 25' cooperate with the second driven gear 24 and are rotated along with the second driven gear 24, which is rotated by the rotation of the lower compression roller gear 23' .

A pair of first circular end plates 23a and 23a' are integrally provided on end surfaces of the upper and lower compression roller gears 23 and 23' such that the first circular end plates 23a and 23a' face each other, thus preventing the upper and lower compression roller gears 23 and 23' from being undesirably removed from the laminator 100. Similarly, a pair of second circular end plates 25a and 25a' are integrally provided on end surfaces of the upper and lower heating roller gears 25 and 25' such that the circular end plates 25a and 25a' face each other, thus preventing the upper and lower heating roller gears 25 and 25' from being undesirably removed from the laminator 100.

The operation of the laminator 100 of the present invention having the above-mentioned structure will be explained herein below with reference to FIGS. 4a and 4b.

FIG. 4a shows of the laminator 100 which is ready for a laminating process. As shown in FIG. 4a, the laminator 100 further includes a pressure adjusting device 30 which is provided on the outer surface of each of the sidewalls 1 and 1' of the laminator 100. When a first link 31 of the pressure adjusting device 30 rotates upwards, a pair of coupling units 33 and 33', which are coupled to the first links 31, rotate in a predetermined direction. Then, a pair of rotating arms 40 and 40', which are coupled to the coupling units 33 and 33', rotates along with the coupling units 33 and 33'. As a result, a film support shaft 32, which is provided between the rotating arms 40 and 40' in a lateral direction, moves downwards, thus providing a, space to install the upper and lower film rolls 4 and 3 in the laminator 100. Thereafter, the upper film roll 4 is set between the upper film roll supports 4a provided at the upper portion of the sidewalls 1 and 1' of the laminator 100. An end of the film extracted from the upper film roll 4 is supplied between the upper and lower heating rollers 6 and 6' via the guide roller 8, which is provided below the upper film roll 4, and the upper preheating device 5 such that the film is in close contact with an outer surface of the upper preheating device 5. Furthermore, the lower film roll 3 is set between the lower film roll supports 3a provided at the lower portion of the laminator 100. An end of the film extracted from the lower film roll 3 is supplied between the upper and lower heating rollers 6 and 6' via the film support shaft 32 and the lower preheating device 5' such that the film is in close contact with an outer surface of the lower preheating device 5'. Then, the laminator 100 is ready for a process of coating the films on upper and lower surfaces of a target sheet.

In this state, because paper tubes of the film rolls 3 and 4 are forcibly fitted over the film roll supports 3a and 4a, the film rolls 3 and 4 are forcibly rotated around the film roll supports 3a and 4a. Therefore, the films extracted from the film rolls 3 and 4 become tense when supplied to the rollers.

As such, when ready for the laminating process, the feed tray 2 is coupled to the coupling units 33 and 33' provided between the sidewall 1 and 1' of the laminator 100 such that coupling slots 2a, of the feed tray 2 are fitted over coupling rails 33a and 33a' of the coupling unit 33 and 33'. As shown in FIG. 4b, the user rotates the feed tray 2 downwards at 90° angle until stop notches 2b of the feed tray 2 are hooked to stop protrusions 1a and 1a' provided at predetermined positions on the inner surface of the sidewall 1 and 1' of the laminator 100. Simultaneously, the first link 31, which is coupled to each coupling unit 33, 33' through a slide slot 1b which has an arc shape and is formed through each sidewall 1, 1', rotates downwards along with the coupling units 33 and 33' .

The first link 31 is rotatably coupled at a lower end thereof to an end of a second link 34. Therefore, when the first link 31 moves downwards, the second link 34 also moves downwards. Then, a vertically movable link 35, which is coupled to a predetermined position of the second link 34, moves downwards.

In addition, a lower bracket 36, which is coupled to an upper end of the vertically movable link 34, is moved downwards by the movement of the vertical movable link 34. Thus, a support plate 37a of an upper bracket 37, which is coupled to a support plate 36a of the lower bracket 36 by a guide rod 39 and a spring 38 fitted over the guide rod 39, moves downwards. As a result, both the upper heating roller 6 and the upper compression roller 7, which are provided at both ends of the upper bracket 37, move downwards. Simultaneously, the upper heating and compression rollers 6 and 7 can powerfully compress the target sheet due to the elasticity of the spring 38.

In the meantime, when the rotating arms 40 are rotated downwards by the rotation of the coupling units 33 and 33', the film support shaft 32 mounted to the lower ends of the rotating arms 40 moves rearwards. As a result, the lower film, which has sagged below the film supporting shaft 32, becomes tense due to the film supporting shaft 62.

In the above-state in which the rollers are compressed, the upper and lower films are first coated on a target sheet by the upper and lower heating rollers 6 and 6'. Continuously, the target sheet is reliably coated while passing through the upper and lower compression rollers 7 and 7'. As such, the film-coated target sheet is placed on the output plate 9 provided at the rear part of the laminator 100. Then, the user cuts the film-coated target sheet using the cutting unit 10 provided on the output plate 9. A plurality of film-coated sheets can be obtained by continuously executing this process.

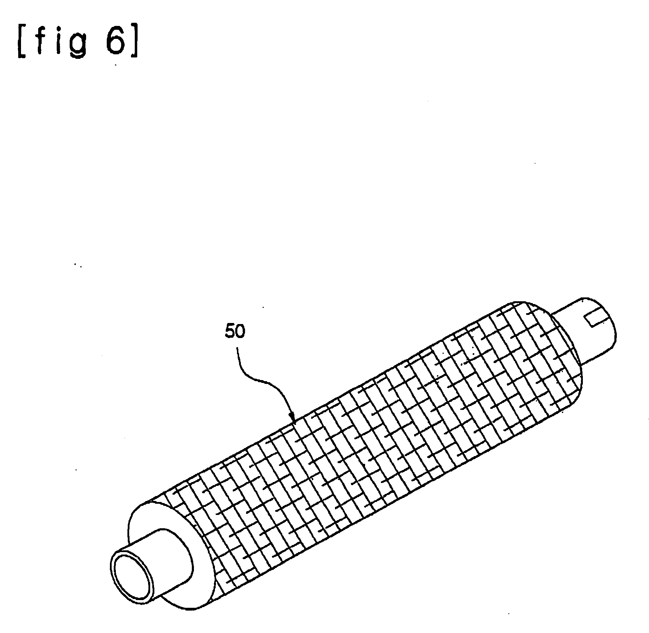

In the present invention, the upper heating roller 6 may be able to be replaced with a roller 50 having an embossing function, as shown in FIG. 6. Therefore, as required, the user replaces the upper heating roller 6 with the embossing roller 50, thus texturing a target sheet with various and graceful shapes.

A process of manufacturing the embossing roller 50 is as follows. First, a film having various figures or patterns is manufactured. Thereafter, an acid-resistant sensitizer is applied to an outer surface of an embossing roller body. The film having figures or patterns is adhered to the outer surface of the embossing roller body. An appropriate amount of light irradiates the embossing roller body before the film having figures or patterns is removed from the embossing roller body. After a developing solution is applied to the embossing roller body, the embossing roller body is immersed in a chemical for etching. Thereafter, the embossing roller body rotates in the etching chemical to apply the chemical to the outer surface of the embossing roller body. Then, the outer surface of the embossing roller body is evenly etched, thus producing an embossing roller 50.

The technical content regarding the preheating device 5 was described in detail in Korean Utility Model registration No. 0254657, which was filed by the inventor of the present invention. Therefore, in this specification, further explanation is omitted.

As described above, the present invention provides a laminator with a small film roll which has a structure capable of having the small film roll mounted thereto, thus reducing costs required for laminating a target sheet, thereby solving problems occurring due to expensive costs, and in which a feed tray is easily and removably installed, so that a process of mounting the small film roll to the laminator is simplified. As well, despite a simple film roll installation process, the film extracted from the film roll is sufficiently tense without an additional film tensioning means. Thereby most users can easily use the laminator.

Furthermore, because the film extracted from the film roll is automatically tense due to the film support shaft, the number of defective film-coated products is minimized. In addition, because the laminator of the present invention has a cutting unit at a rear portion thereof, a user can easily cut a film-coated sheet.

Moreover, a heating roller is able to be replaced by a roller having an embossing function. Therefore, as required, a target sheet may be easily embossed.

As well, the present invention has a structure in which the rollers are automatically compressed by installation of the feed tray. Therefore, an additional compression device is unnecessary. Thus, the present invention solves a problem occurring because the user does not mistakenly manipulate a compression adjusting handle of the additional compression device during a film setting process.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A laminator (100) with a small film roll (3, 4) which is provided with upper and lower heating rollers (6, 6'), upper and lower compression rollers (7, 7'), and a pair of preheating devices (5, 5') provided around the upper and lower heating rollers (6, 6'), wherein the laminator (100) comprises:
a pair of sidewalls (1, 1') provided at both sides of the laminator (100), each of the sidewalls (1, 1') of the laminator(100) comprising:
upper and lower film roll supports (4a, 3a) provided on upper and lower portions of an inner surface of the sidewall (1, 1'), respectively;
a plurality of slide slots (1b) formed at intermediate positions through the sidewall (1, 1'); and
a stop protrusion provided at a predetermined position on the inner surface of the sidewall (1, 1');
a drive unit (20) provided on an outer surface of one of the sidewalls (1, 1') of the laminator (100), comprising:
a drive gear (21) provided at a predetermined position on the outer surface of the sidewall (1, 1') and rotated by a drive motor;
a firs; driven gear (22) engaging with the drive gear (21) and rotated by the rotation of the drive gear (21);
upper and lower compression roller gears (23, 23') cooperating with the first driven gear (22) and rotated by the rotation of the first driven gear (22), with a circular end plate (23a, 23a') provided on an end surface of each of the upper and lower compression roller gears (23, 23') such that the circular end plates (23a, 23a') of the upper and lower compression roller gears (23, 23') face each other, thus preventing the upper and lower compression roller gears (23, 23') from being removed;
a second driven gear (24) engaging with the lower compression roller gear (23') and rotated along with the lower compression roller gear (23'); and
upper and lower heating roller gears (25, 25') cooperating with the second driven gear (24) and rotated along with the second driven gear (24), with a circular end plate provided on an end surface of each of the upper and lower heating roller gears (25, 25') such that the circular end plates (25a, 25a') of the upper and lower heating roller gears (25, 25') face to each other, thus preventing the upper and lower heating roller gears (25, 25') from being removed;
a feed tray (2) provided between the sidewalls (1, 1') of the laminator (100), comprising:
a coupling slot (2a) provided at a predetermined position on each of opposite sides of the feed tray (2) in a longitudinal direction, so that the feed tray (2) is coupled to a pair of coupling units (33, 33') by the coupling slots (2a); and
a stop notch (2b) provided at a predetermined position on each of the opposite sides of the feed tray (2) such that the stop notch (2b) is hooked to the stop protrusion (1a, 1a') provided on the inner surface of each of the sidewalls (1, 1') of the laminator (100);
a pressure adjusting device (30) provided on the outer surface of each of the sidewalls (1, 1') of the laminator (100), comprising:
a first link (31);
a second link (34) rotatably coupled at an end thereof to an end of the first link (31);
a vertically movable link (35) rotatably coupled to a predetermined position of the second link (34);
a lower bracket (36) coupled, to an upper end of the vertically movable link (35), with a plurality of guide slots formed in a central portion of the lower bracket (36), and a first support plate (36a) provided on an upper end of the lower bracket (36); and
an upper bracket (37) coupled to a guide rod (39) mounted to the lower bracket, with a spring (38) fitted over the guide rod (39), and a second support plate (37a) provided on a lower end of the upper bracket (37); and
a pair of rotating arms (40, 40') coupled to coupling units (33, 33') provided inside the sidewalls (1, 1') of the laminator (100), with a film support shaft (32) provided between the rotating arms (40, 40'), so that, when the first link (31) is rotated along the slide slots of the sidewalls (1, 1') of the laminator (100), the coupling units (33, 33') are rotated, thereby the rotating arms (40, 40') are rotated, thus moving the film support shaft (32) in a predetermined direction.

2. The laminator as set forth in claim 1, wherein the upper heating roller (6) is able to be replaced by a roller (50) having an embossing function.

## Patentansprüche

1. Laminiervorrichtung (100) mit einer kleinen Filmrolle (3, 4), die mit oberen und unteren Heizwalzen (6, 6'), oberen und unteren Druckwalzen (7, 7') und zwei Vorwärmvorrichtungen (5, 5') versehen ist, die um die oberen und unteren Heizwalzen (6, 6') herum vorgesehen sind, wobei die Laminiervorrichtung (100) umfasst:
zwei an beiden Seiten der Laminiervorrichtung (100) vorgesehene Seitenwände (1, 1'), wobei jede der Seitenwände (1, 1') der Laminiervorrichtung (100) umfasst:
obere und untere Filmrollenauflagen (4a, 3a), die jeweils an oberen und unteren Abschnitten einer Innenfläche der Seitenwände (1, 1') vorgesehen sind;
mehrere seitliche Schlitze (1b), die an Mittelpositionen durch die Seitenwände (1, 1') hindurch ausgebildet sind; und
einen Anschlagvorsprung, der in einer vorgegebenen Stellung an der Innenfläche der Seitenwände (1, 1') vorgesehen ist;
eine Antriebseinheit (20), die an einer Außenfläche von einer der Sei- tenwände (1, 1') der Laminiervorrichtung (100) vorgesehen ist und umfasst:
ein Antriebszahnrad (21), das in einer vorgegebenen Stellung an der Außenfläche der Seitenwand (1, 1') vorgesehen ist und von einem Antriebsmotor in Drehung versetzt wird;
ein erstes angetriebenes Zahnrad (22), das mit dem Antriebszahnrad (21) in Eingriff kommt und durch die Drehung des Antriebszahnrads in Drehung versetzt wird;
obere und untere Druckwalzenzahnräder (23, 23'), die mit dem ersten angetriebenen Zahnrad (22) zusammenwirken und durch die Drehung des ersten angetriebenen Zahnrads (22) in Drehung versetzt werden, wobei an einer Endfläche von jeder der oberen und unteren Druckwalzenzahnräder (23, 23') eine kreisförmige Endplatte (23a, 23a') derart vorgesehen ist, dass die kreisförmigen Endplatten (23a, 23a') der oberen und unteren Druckwalzenzahnräder (23, 23') einander gegenüber liegen und mithin verhindern, dass die oberen und unteren Druckwalzenzahnräder (23, 23') entfernt werden;
ein zweites angetriebenes Zahnrad (24), das mit dem unteren Druckwalzenzahnrad (23') in Eingriff kommt und zusammen mit dem unteren Druckwalzenzahnrad (23') in Drehung versetzt wird; und
obere und untere Heizwalzenzahnräder (25, 25'), die mit dem zweiten angetriebenen Zahnrad (24) zusammenwirken und zusammen mit dem zweiten angetriebenen Zahnrad (24) in Drehung versetzt werden, wobei an einer Endfläche von jedem der oberen und unteren Heizwalzenzahnräder (25, 25') eine kreisförmige Endplatte derart vorgesehen ist, dass die kreisförmigen Endplatten (23a, 23a') der oberen und unteren Druckwalzenzahnräder (23, 23') einander gegenüber liegen und mithin verhindern, dass die oberen und unteren Druckwalzenzahnräder (23, 23') entfernt werden;
eine Zuführmulde (2), die zwischen den Seitenwänden (1, 1') der Laminiervorrichtung (100) vorgesehen ist und umfasst:
einen Verbindungsschlitz (2a), der in einer vorgegebenen Stellung auf jeder der einander gegenüber liegenden Seiten der Zuführschale (2) in Längsrichtung vorgesehen ist, so dass die Zuführschale (2) durch die Verbindungsschlitze (2a) mit zwei Verbindungseinheiten (33, 33') verbunden ist; und
eine Anschlagvertiefung (2b), die in einer vorgegebenen Stellung auf jeder der einander gegenüber liegenden Seiten der Zuführschale (2) derart vorgesehen ist, dass die Anschlagvertiefung (2b) an dem an der Innenfläche von jeder der Seitenwände (1, 1') der Laminiervorrichtung (100) vorgesehenen Anschlagvorsprung (1a, 1a') festgehakt ist;
eine Druckeinstellvorrichtung (30), die an der Außenfläche von jeder der Seitenwände (1, 1') der Laminiervorrichtung (100) vorgesehen ist und umfasst:
ein erstes Verbindungsglied (31);
ein zweites Verbindungsglied (34), das an einem Ende desselben mit einem Ende des ersten Verbindungsglieds (31) drehbar verbunden ist;
ein in Vertikalrichtung bewegbares Verbindungsglied (35), das mit einer vorgegebenen Position des zweiten Verbindungsglieds (34) verbunden ist;
eine untere Halterung (36), der mit einem oberen Ende des in Vertikalrichtung bewegbaren Verbindungsglieds (35) verbunden ist, wobei eine Mehrzahl von Führungsschlitzen in einem mittigen Abschnitt der unteren Halterung (36) ausgebildet ist, und einer ersten Abstützplatte (36a), die an eine oberen Ende der unteren Halterung (36) vorgesehen ist; und
einem oberen Bügel (37), der mit einer an der unteren Halterung angebrachten Führungsstange (39) verbunden ist, wobei über der Führungsstange (39) eine Feder (38) befestigt ist, und einer zweiten Abstützplatte (37a), die an einem unteren Ende der oberen Halterung (37) vorgesehen ist; und
zwei drehbare Arme (40, 40'), die mit im Innern der Seitenwände (1, 1') der Laminiervorrichtung (100) vorgesehenen Verbindungseinheiten (33, 33') verbunden sind, wobei zwischen den sich drehenden Armen (40, 40') eine Filmabstützwelle (32) vorgesehen ist, so dass dann, wenn das erste Verbindungsglied (31) entlang den seitlichen Schlitzen der Seitenwände (1, 1') der Laminiervorrichtung (100) gedreht wird, die Verbindungsglieder (33, 33') in Drehung versetzt werden und **dadurch** die drehbaren Arme (40, 40') gedreht werden und mithin die Filmabstützwelle (32) in einer vorgegebenen Richtung bewegt wird.

2. Laminiervorrichtung nach Anspruch 1, wobei die obere Heizwalze (6) durch eine Walze (50) mit Prägefunktion ersetzt werden kann.

## Revendications

1. Appareil de lamination (100) avec un petit rouleau de film (3, 4) qui est pourvu de rouleaux chauffants supérieur et inférieur (6, 6'), de rouleaux de compression supérieur et inférieur (7, 7'), et d'une paire de dispositifs préchauffants (5, 5') prévue autour des rouleaux chauffants supérieur et inférieur (6, 6'), l'appareil de lamination (100) comprenant :
une paire de parois latérales (1, 1') prévue des deux côtés de l'appareil de lamination (100), chacune des parois latérales (1, 1') de l'appareil de lamination (100) comprenant :
des supports de rouleau de film supérieur et inférieur (4a, 3a) prévus respectivement sur des portions supérieure et inférieure d'une surface intérieure de la paroi latérale (1, 1') ;
une multiplicité de fentes latérales (1b) formée à des emplacements intermédiaires à travers la paroi latérale (1, 1') ; et
une saillie d'arrêt prévue à un emplacement prédéterminé sur la surface intérieure de la paroi latérale (1, 1');
une unité d'entraînement (20) prévue sur une surface extérieure de l'une des parois latérales (1, 1') de l'appareil de lamination (100), comprenant :
une roue dentée d'entraînement (21) prévue à un emplacement prédéterminé sur la surface extérieure de la paroi latérale (1, 1') et entraînée en rotation par un moteur de commande;
une première roue dentée entraînée (22) engrenant avec la roue dentée d'entraînement (21) et entraînée en rotation par la rotation de la roue dentée d'entraînement (21) ;
des roues dentées de rouleau de compression supérieure et inférieure (23, 23') coopérant avec la première roue dentée entraînée (22) et entraînées en rotation par la rotation de la première roue dentée entraînée (22), avec une plaque terminale circulaire (23a, 23a') prévue sur une surface terminale de chacune des roues dentées de rouleau de compression supérieure et inférieure (23, 23') de sorte que les plaques terminales circulaires (23a, 23a') des roues dentées de rouleau de compression supérieure et inférieure (23, 23') sont l'une en face de l'autre, empêchant ainsi que les roues dentées de rouleau de compression supérieure et inférieure (23, 23') ne soient retirées ;
une seconde roue dentée entraînée (24) engrenant avec la roue dentée de rouleau de compression inférieure (23') et entraînée en rotation avec la roue dentée de rouleau de compression inférieure (23') ; et
des roues dentées de rouleau chauffant supérieure et inférieure (25, 25') coopérant avec la seconde roue dentée entraînée (24) et entraînées en rotation avec la seconde roue dentée entraînée (24), avec une plaque terminale circulaire prévue sur une surface terminale de chacune des roues dentées de rouleau chauffant supérieure et inférieure (25, 25') de sorte que les plaques terminales circulaires (25a, 25a') des roues dentées de rouleau chauffant supérieure et inférieure (25, 25') sont l'une en face de l'autre, empêchant ainsi que les roues dentées de rouleau chauffant supérieure et inférieure (25, 25') ne soient retirées ;
un plateau d'alimentation (2) prévu entre les parois latérales (1,1') de l'appareil de lamination (100), comprenant :
une fente de couplage (2a) prévue à un emplacement prédéterminé sur chacun des côtés opposés du plateau d'alimentation (2) dans une direction longitudinale, de sorte que le plateau d'alimentation (2) est couplé à une paire d'unités de couplage (33, 33') par les fentes de couplage (2a) ; et
un cran de retenue (2b) prévu à un emplacement prédéterminé sur chacun des côtés opposés du plateau d'alimentation (2) de sorte que le cran de retenue (2b) est accroché à la saillie d'arrêt (1a, 1a') prévue sur la surface intérieure de chacune des parois latérales (1, 1') de l'appareil de lamination (100) ;
un dispositif de réglage de pression (30) prévu sur la surface extérieure de chacune des parois latérales (1, 1') de l'appareil de lamination (100), comprenant :
une première pièce de liaison (31) ;
une seconde pièce de liaison (34) couplée de manière rotative au niveau d'une de ses extrémités à une extrémité de la première pièce de liaison (31) ;
une pièce de liaison mobile verticalement (35) couplée de manière rotative à un emplacement prédéterminé de la seconde pièce de liaison (34) ;
un support inférieur (36) couplé à une extrémité supérieure de la pièce de liaison mobile verticalement (35), avec une multiplicité de fentes dé guidage formée dans une portion centrale du support inférieur (36), et une première plaque de support (36a) prévue sur une extrémité supérieure du support inférieur (36) ; et
un support supérieur (37) couplé à une tige de guidage (39) montée sur le support inférieur, avec un ressort (38) ajusté sur la tige de guidage (39), et une seconde plaque de support (37a) prévue sur une extrémité inférieure du support supérieur (37) ; et
une paire de bras pivotants (40, 40') couplée aux unités de couplage (33, 33') prévue à l'intérieur des parois latérales (1, 1') de l'appareil de lamination (100) avec un arbre de support de film (32) prévu entre les arbres pivotants (40, 40'), de sorte que lorsque la première pièce de liaison (31) est entraînée en rotation le long des fentes de glissement des parois latérales (1, 1') de l'appareil de lamination (100), les unités de couplage (33, 33') sont entraînées en rotation, ainsi les bras pivotants (40, 40') sont entraînés en rotation, déplaçant ainsi l'arbre de support de film (32) dans une direction prédéterminée.

2. Appareil de lamination selon la revendication 1, dans lequel le rouleau chauffant supérieur (6) peut être remplacé par un rouleau (50) ayant une fonction de gaufrage.
